# EUROPEAN PATENT APPLICATION

(11) **EP 2 424 314 A1**
(43) Date of publication of application: **29.02.2012**
(21) Application number: 10766894.9
(22) Date of filing: 22.02.2010
(51) Int. Cl.: H04W 52/54, H04W 52/32, H04W 84/10

(54) **COMMUNICATION SYSTEM**

(30) Priority: 24.04.2009 JP 2009106823
(71) Applicant: NEC Corporation, Tokyo 108-8001 (JP)
(72) Inventor: NAKATA, Atsushi, Tokyo 108-8001 (JP); UEDA, Yoshio, Tokyo 108-8001 (JP)
(74) Representative: Glawe, Delfs, Moll
(86) International application number: PCT/JP2010/052609
(87) International publication number: WO 2010/122834

(57) **Abstract**

Base station 101 sets, when a transmission power value set in advance is smaller than a threshold set in advance, the threshold as a power value to be notified, sets a value obtained by subtracting the threshold from the transmission power value as a compensation power value, and transmits the power value to be notified and the compensation power value to UE 301. UE 301 receives the power value to be notified and the compensation power value transmitted from base station 101.

## Description

### Technical Field

The present invention relates to a communication system, a radio base station, a radio base station control apparatus, a communication terminal, and a transmission power value notifying method for notifying a transmission power value of a signal.

### Background Art

In recent years, radio communication technologies have rapidly spread and various physical channels are present on communicated radio. Among the physical channels, as one of channels in a downlink direction (a direction from a radio base station to a communication terminal), there is a Primary Common Pilot Channel (Primary CPICH) whose power intensity is used according to the standard of handover or the like (see, for example, Non Patent Literature 1). A transmission power value that is used when this Primary Common Pilot Channel (hereinafter abbreviated as Primary CPICH) is transmitted is notified from the radio base station to the communication terminal. This transmission power value is indicated in a predetermined radio control message transmitted from the radio base station to the communication terminal.

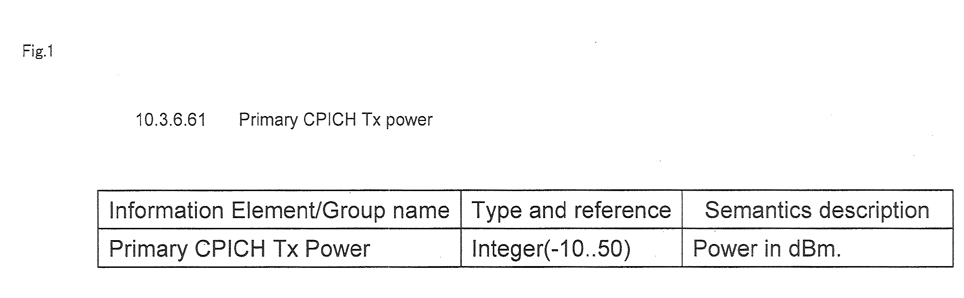

Figure 1 is a diagram showing a transmission power value of a Primary CPICH indicated in a radio control message specified by standardization.

As shown in Figure 1, a setting range of the transmission power value (Tx Power) of the Primary CPICH is -10 to 50 [dBm].

### Citation List

### Non Patent Literature

Non Patent Literature 1: 3GPP TS25. 331

### Summary of Invention

### Technical Problem

Recently, for example, in many cases, a small radio base station apparatus that only has to have a communicable range of several meters to several tens meters is set indoors in a house, a company, or the like. In some cases, it is thought that such a small radio base station apparatus only has to have a smaller communicable range. A transmission power value of a Primary CPICH transmitted from the small radio base station apparatus may be an extremely small value. For example, when a communication range is equal to or smaller than several meters, the small radio base station apparatus only has to transmit the Primary CPICH with a transmission power value smaller than -10 [dBm].

In those small radio base station apparatuses, it is thought that, during the start thereof, reception power from a macro radio base station apparatus or from a small radio base station apparatus in the neighborhood and a power attenuation ratio are recognized and transmission power is reduced so as not to affect the radio base stations in the neighborhood. Therefore, transmission power of a signal transmitted from the small radio base station is required to be a small value.

Further, if the radio base station apparatus includes a saving mode in a time frame or the like when there is no user who uses the radio base station apparatus, for example, at night, it is thought that transmission power is reduced in order to voluntarily reduce coverage. Therefore, the transmission power of a signal transmitted from the small radio base station apparatus must be a small value.

However, when the transmission power value of the Primary CPICH can be set only in the range explained above, a transmission power value smaller than the range (e.g., -50 [dBm], which is smaller than -10 [dBm]) cannot be set. Therefore, the radio base station apparatus cannot notify a communication terminal that the radio base station apparatus desires to transmit the Primary CPICH with a transmission power value smaller than the range. The communication terminal also cannot learn about it.

For example, the transmission power of an uplink of the communication terminal is determined in association with a transmission power value of the Primary CPICH. Therefore, even when the communication terminal that does not receive the notification has a sufficiently small transmission power value to the radio base station apparatus, a problem occurs in that unnecessary power is consumed.

Since the transmission power value cannot be set as explained above, there is a problem in that a transmission power value of the Primary CPICH transmitted from a radio base station such as the small radio base station apparatus is an unnecessarily large value and, as a result, radio interference and wasteful power consumption are caused.

It is an object of the present invention to provide a communication system, a radio base station, a radio base station control apparatus, a communication terminal, and a transmission power value notifying method that solve at least one of the problems explained above.

### Solution to Problem

A communication system according to the present invention is a communication system including a communication terminal and a radio base station that transmits a reference signal to the communication terminal, wherein
the radio base station sets, when a transmission power value set that is in advance, as a value of transmission power of the reference signal, is smaller than a threshold set in advance, the threshold as a power value to be notified, sets a value obtained by subtracting the threshold from the transmission power value as a compensation power value, and transmits the power value to be notified and the compensation power value to the communication terminal, and
the communication terminal receives the power value to be notified and the compensation power value.

A communication system according to the present invention is a communication system including a communication terminal including a radio communication function, a radio base station that performs radio communication with the communication terminal and transmits a signal of a primary common pilot channel to the communication terminal, and a radio base station control apparatus that controls the radio base station, wherein
the radio base station control apparatus transmits, when a transmission power value that is set in advance, as a value of transmission power of the primary common pilot channel, is equal to or larger than a first threshold set in advance, the transmission power value to the radio base station as a first power value to be notified and sets, when the transmission power value is smaller than the first threshold, the first threshold as the first power value to be notified, sets a value obtained by subtracting the first threshold from the transmission power value as a first compensation power value, and transmits the first power value to be notified and the first compensation power value to the radio base station,
wherein the radio base station recognizes, when the first power value to be notified transmitted from the radio base station control apparatus and the first threshold are different, the first power value to be notified as the transmission power value of the primary common pilot channel transmitted from the radio base station, recognizes, when the first power value to be notified transmitted from the radio base station control apparatus and the first threshold are the same, a value obtained by adding up the first compensation power value and the first power value to be notified transmitted from the radio base station control apparatus as the transmission power value of the primary common pilot channel transmitted from the radio base station, transmits, when the recognized transmission power value is equal to or larger than a second threshold set in advance, using the transmission power, the transmission power value to the communication terminal as a second power value to be notified, and sets, when the transmission power value is smaller than the second threshold, the second threshold as the second power value to be notified, sets a value obtained by subtracting the second threshold from the transmission power value as a second compensation power value, and transmits the second power value to be notified and the second compensation power value to the communication terminal using the transmission power, and
wherein the communication terminal recognizes, when the second power value to be notified transmitted from the radio base station and the second threshold are different, the second power value to be notified as the transmission power value of the primary common pilot channel transmitted from the radio base station and recognizes, when the second power value to be notified transmitted from the radio base station and the second threshold are the same, a value obtained by adding up the second compensation power value and the second power value to be notified transmitted from the radio base station as the transmission power value of the primary common pilot channel transmitted from the radio base station.

A radio base station according to the present invention is a radio base station that performs radio communication with a communication terminal including a radio communication function and transmits a signal of a primary common pilot channel to the communication terminal, the radio base station including:
a memory that stores a transmission power value set in advance as a value of transmission power of the primary common pilot channel;
a transmission power value comparing section that compares the transmission power value stored in the memory and a threshold set in advance;
a radio control message constructing section that sets, when the transmission power value is equal to or larger than the threshold as a result of the comparison in the transmission power value comparing section, the transmission power value as a power value to be notified, sets, when the transmission power value is smaller than the threshold, the threshold as the power value to be notified and sets a value obtained by subtracting the threshold from the transmission power value as a compensation power value, and constructs a radio control message including the power value to be notified and the compensation power value; and
a transmitting section that transmits the radio control message constructed by the radio control message constructing section to the communication terminal using the transmission power.

A radio base station according to the present invention is a radio base station that performs radio communication with a communication terminal including a radio communication function and transmits a signal of a primary common pilot channel to the communication terminal, the radio base station including:
a power-value-to-be-notified comparing section that compares a first power value to be notified transmitted from a radio base station control apparatus, which controls the radio base station, and a first threshold set in advance;
a recognizing section that recognizes, when the first power value to be notified and the first threshold are different as a result of the comparison in the power-value-to-be-notified comparing section, the first power value to be notified as the transmission power value of the primary common pilot channel transmitted from the radio base station and recognizes, when the first power value to be notified and the first threshold are the same, a value obtained by adding up the first compensation power value and the first power value to be notified transmitted from the radio base station control apparatus as the transmission power value of the primary common pilot channel transmitted from the radio base station;
a transmission power value comparing section that compares the transmission power value recognized by the recognizing section and a second threshold set in advance;
a radio control message constructing section that sets, when the transmission power value is equal to or larger than the second threshold as a result of the comparison in the transmission power value comparing section, the transmission power value as a second power value to be notified, sets, when the transmission power value is smaller than the second threshold, the second threshold as the second power value to be notified and sets a value obtained by subtracting the second threshold from the transmission power value as a second compensation power value, and constructs a radio control message including the second power value to be notified and the second compensation power value; and
a transmitting section that transmits the radio control message constructed by the radio control message constructing section to the communication terminal using the transmission power.

A radio base station control apparatus according to the present invention is a radio base station control apparatus that controls a radio base station that transmits a signal of a primary common pilot channel to a communication terminal including a radio communication function, the radio base station control apparatus including:
a memory that stores a transmission power value set in advance as a value of transmission power of the primary common pilot channel;
a transmission power value comparing section that compares the transmission power value stored in the memory and a threshold set in advance;
a transmission message constructing section that sets, when the transmission power value is equal to or larger than the threshold as a result of the comparison in the transmission power value comparing section, the transmission power value as a power value to be notified, sets, when the transmission power value is smaller than the threshold, the threshold as the power value to be notified and sets a value obtained by subtracting the threshold from the transmission power value as a compensation power value, and constructs a transmission message including the power value to be notified and the compensation power value; and
a transmitting section that transmits the transmission message constructed by the transmission message constructing section to the radio base station.

A communication terminal according to the present invention is a communication terminal including a radio communication function and configured to be connectable to a radio base station that transmits a signal of a primary common pilot channel, the communication terminal including:
a power-value-to-be-notified comparing section that compares a power value to be notified included in a radio control message transmitted from the radio base station and a threshold set in advance;
an extracting section that extracts a compensation power value from the radio control message when the power value to be notified and the threshold are the same as a result of the comparison in the power-value-to-be-notified comparing section;
a calculating section that adds the power value to be notified to the compensation power value extracted by the extracting section; and
a recognizing section that recognizes, when the power value to be notified and the threshold are different as a result of the comparison in the power-value-to-be-notified comparing section, the power value to be notified as the transmission power value of the primary common pilot channel transmitted from the radio base station and recognizes, when the power value to be notified and the threshold are the same, a value calculated by the calculating section as the transmission power value of the primary common pilot channel transmitted from the radio base station.

A transmission power notifying method according to the present invention is a transmission power value notifying method in a communication system including a communication terminal including a radio communication function and a radio base station that performs radio communication with the communication terminal and transmits a signal of a primary common pilot channel to the communication terminal, the transmission power value notifying method including:
processing in which the radio base station compares a transmission power value set in advance as a value of transmission power of the primary common pilot channel and a threshold set in advance;
processing in which the radio base station sets, when the transmission power value is equal to or larger than the threshold as a result of the comparison, the transmission power value as a power value to be notified and transmits the power value to be notified to the communication terminal;
processing in which the radio base station sets, when the transmission power value is smaller than the threshold as a result of the comparison, the threshold as the power value to be notified, sets a value obtained by subtracting the threshold from the transmission power value as a compensation power value and transmits the power value to be notified and the compensation power value to the communication terminal;
processing in which the communication terminal compares the power value to be notified transmitted from the radio base station and the threshold;
processing in which the communication terminal recognizes, when the power value to be notified and the threshold are different, the power value to be notified as the transmission power value of the primary common pilot channel transmitted from the radio base station; and
processing in which the communication terminal recognizes, when the power value to be notified and the threshold are the same, a value obtained by adding up the compensation power value and the power value to be notified transmitted from the radio base station as the transmission power value of the primary common pilot channel transmitted from the radio base station.

A transmission power notifying method according to the present invention is a transmission power value notifying method in a communication system including a communication terminal including a radio communication function, a radio base station that performs radio communication with the communication terminal and transmits a signal of a primary common pilot channel to the communication terminal, and a radio base station control apparatus that controls the radio base station, the transmission power value notifying method including:
processing in which the radio base station control apparatus compares a transmission power value set in advance as a value of transmission power of the primary common pilot channel and a first threshold set in advance;
processing in which the radio base station control apparatus transmits, when the transmission power value is equal to or larger than the first threshold as a result of the comparison, the transmission power value to the radio base station as a first power value to be notified;
processing in which the radio base station control apparatus sets, when the transmission power value is smaller than the first threshold as a result of the comparison, the first threshold as the first power value to be notified, sets a value obtained by subtracting the first threshold from the transmission power value as a first compensation power value, and transmits the first power value to be notified and the first compensation power value to the radio base station;
processing in which the radio base station compares the first power value to be notified transmitted from the radio base station control apparatus and the first threshold;
processing in which the radio base station recognizes, when the first power value to be notified and the first threshold are different as a result of the comparison, the first power value to be notified as the transmission power value of the primary common pilot channel transmitted from the radio base station;
processing in which the radio base station recognizes, when the power value to be notified and the first threshold are the same as a result of the comparison, a value obtained by adding up the first compensation power value and the first power value to be notified as the transmission power value of the primary common pilot channel transmitted from the radio base station;
processing in which the radio base station compares the recognized transmission power value and a second threshold set in advance;
processing in which the radio base station transmits, when the transmission power value is equal to or larger than the second threshold as a result of the comparison, using the transmission power, the transmission power value to the communication terminal as a second power value to be notified;
processing in which the radio base station sets, when the transmission power value is smaller than the second threshold as a result of the comparison, the second threshold as the second power value to be notified, sets a value obtained by subtracting the second threshold from the transmission power value as a second compensation power value and transmits the second power value to be notified and the second compensation power value to the communication terminal using the transmission power;
processing in which the communication terminal compares the second power value to be notified transmitted from the radio base station and the second threshold;
processing in which the communication terminal recognizes, when the second power value to be notified and the second threshold are different as a result of the comparison, the second power value to be notified as the transmission power value of the primary common pilot channel transmitted from the radio base station; and
processing in which the communication terminal recognizes, when the second power value to be notified and the second threshold are the same as a result of the comparison, a value obtained by adding up the second compensation power value and the second power value to be notified as the transmission power value of the primary common pilot channel transmitted from the radio base station.

A transmission power notifying method according to the present invention is a transmission power value notifying method in which a radio base station, which performs radio communication with a communication terminal including a radio communication function and transmits a signal of a primary common pilot channel to the communication terminal, notifies the communication terminal of a transmission power value, the transmission power value notifying method including:
processing for comparing a transmission power value set in advance as a value of transmission power of the primary common pilot channel and a threshold set in advance;
processing for setting, when the transmission power value is equal to or larger than the threshold as a result of the comparison, the transmission power value as a power value to be notified and transmitting the power value to be notified to the communication terminal; and
processing for setting, when the transmission power value is smaller than the threshold as a result of the comparison, the threshold as the power value to be notified, setting a value obtained by subtracting the threshold from the transmission power value as a compensation power value, and transmitting the power value to be notified and the compensation power value to the communication terminal.

A transmission power notifying method according to the present invention is a transmission power value notifying method in which a radio base station, which performs radio communication with a communication terminal including a radio communication function and transmits a signal of a primary common pilot channel to the communication terminal, notifies the communication terminal of a transmission power value, the transmission power value notifying method including:
processing for comparing a first power value to be notified transmitted from a radio base station control apparatus that controls the radio base station and a first threshold set in advance;
processing for recognizing, when the first power value to be notified and the first threshold are different as a result of the comparison, the first power value to be notified as the transmission power value of the primary common pilot channel transmitted from the radio base station;
processing for recognizing, when the first power value to be notified and the first threshold are the same as a result of the comparison, a value obtained by adding up the first compensation power value and the first power value to be notified transmitted from the radio base station control apparatus as the transmission power value of the primary common pilot channel transmitted from the radio base station;
processing for comparing the recognized transmission power value and a second threshold set in advance;
processing for transmitting, when the transmission power value is equal to or larger than the second threshold as a result of the comparison, using the transmission power, the transmission power value to the communication terminal as a second power value to be notified; and
processing for setting, when the transmission power value is smaller than the second threshold as a result of the comparison, the second threshold as the second power value to be notified, setting a value obtained by subtracting the second threshold from the transmission power value as a second compensation power value, and transmitting the second power value to be notified and the second compensation power value to the communication terminal using the transmission power.

A transmission power notifying method according to the present invention is a transmission power value notifying method in which a radio base station control apparatus, which controls a radio base station that transmits a signal of a primary common pilot channel to a communication terminal including a radio communication function, notifies a transmission power value from the radio base station to the communication terminal, the transmission power value notifying method including:
processing for comparing a transmission power value set in advance as a value of transmission power of the primary common pilot channel and a threshold set in advance;
processing for transmitting, when the transmission power value is equal to or larger than the threshold as a result of the comparison, the transmission power value to the radio base station as a power value to be notified; and
processing for setting, when the transmission power value is smaller than the threshold as a result of the comparison, the threshold as the power value to be notified, setting a value obtained by subtracting the threshold from the transmission power value as a compensation power value, and transmitting the power value to be notified and the compensation power value to the radio base station.

A transmission power notifying method according to the present invention is a method in which a communication terminal including a radio communication function and configured to be connectable to a radio base station, which transmits a signal of a primary common pilot channel, recognizes a transmission power value from the radio base station, the method including:
processing for comparing a power value to be notified included in a radio control message transmitted from the radio base station and a threshold set in advance;
processing for recognizing, when the power value to be notified and the threshold are different as a result of the comparison, the power value to be notified as the transmission power value of the primary common pilot channel transmitted from the radio base station; and
processing for recognizing, when the power value to be notified and the threshold are the same as a result of the comparison, a value obtained by adding up a compensation power value included in the radio control message transmitted from the radio base station and the power value to be notified as the transmission power value of the primary common pilot channel transmitted from the radio base station.

### Advantageous Effects of Invention

As explained above, in the present invention, the radio base terminal is configured to transmit, even when a transmission power value of a primary common pilot channel set in advance is smaller than a range of a value set in advance, the transmission power value to the communication terminal. Therefore, it is possible to prevent the occurrence of radio interference and wasteful power consumption in the radio communication system.

### Brief Description of Drawings

[Figure 1] Figure 1 is a diagram showing a transmission power value of a Primary CPICH indicated in a radio control message specified by standardization.
[Figure 2] Figure 2 is a diagram showing a first exemplary embodiment of a communication system according to the present invention.
[Figure 3] Figure 3 is a diagram showing an example of an internal configuration of a base station shown in Figure 2.
[Figure 4] Figure 4 is a diagram showing a configuration example of parameters indicating own cell information of a radio control message constructed by a radio control message constructing section shown in Figure 3.
[Figure 5] Figure 5 is a diagram showing a configuration example of parameters indicating neighbor cell information of the radio control message constructed by the radio control message constructing section shown in Figure 3.
[Figure 6] Figure 6 is a diagram showing a configuration example of parameters indicating a range of a transmission power value (Tx Power) of the Primary CPICH shown in Figures 4 and 5, included in the radio control message constructed by the radio control message constructing section shown in Figure 3.
[Figure 7] Figure 7 is a diagram showing a configuration example of parameters indicating a range of Delta Primary CPICH Tx Power shown in Figures 4 and 5, included in the radio control message constructed by the radio control message constructing section shown in Figure 3.
[Figure 8] Figure 8 is a diagram showing an example of an internal configuration of a UE shown in Figure 2.
[Figure 9] Figure 9 is a flowchart for explaining processing in a base station shown in Figure 2 in a transmission power value notifying method in an exemplary embodiment.
[Figure 10] Figure 10 is a flowchart for explaining processing in the UE shown in Figure 2 in the transmission power value notifying method in the exemplary embodiment.
[Figure 11] Figure 11 is a diagram for explaining an example of a method of setting the parameters explained above.
[Figure 12] Figure 12 is a diagram for explaining an example of the method of setting the parameters explained above.
[Figure 13] Figure 13 is a diagram for explaining an example of the method of setting the parameters explained above.
[Figure 14] Figure 14 is a diagram showing a second exemplary embodiment of the communication system according to the present invention.
[Figure 15] Figure 15 is a diagram showing an example of an internal configuration of a base station shown in Figure 14.
[Figure 16] Figure 16 is a diagram showing a third exemplary embodiment of the communication system according to the present invention.
[Figure 17] Figure 17 is a diagram showing an example of an internal configuration of an RNC shown in Figure 16.
[Figure 18] Figure 18 is a diagram showing an example of an internal configuration of a base station shown in Figure 16.
[Figure 19] Figure 19 is a diagram showing an example of parameters in the case in which a setting range of Primary CPICH Tx Power is extended.
[Figure 20] Figure 20 is a diagram for explaining an example of a method of setting parameters used when a transmission power value is smaller than a lower limit of the setting range of the Primary CPICH Tx Power.
[Figure 21] Figure 21 is a diagram for explaining the example of the method of setting parameters used when the transmission power value is smaller than the lower limit of the setting range of the Primary CPICH Tx Power.
[Figure 22] Figure 22 is a diagram for explaining the example of the method of setting parameters used when the transmission power value is smaller than the lower limit of the setting range of the Primary CPICH Tx Power.

### Description of Embodiments

Exemplary embodiments of the present invention are explained below with reference to the drawings.

### (First Exemplary embodiment)

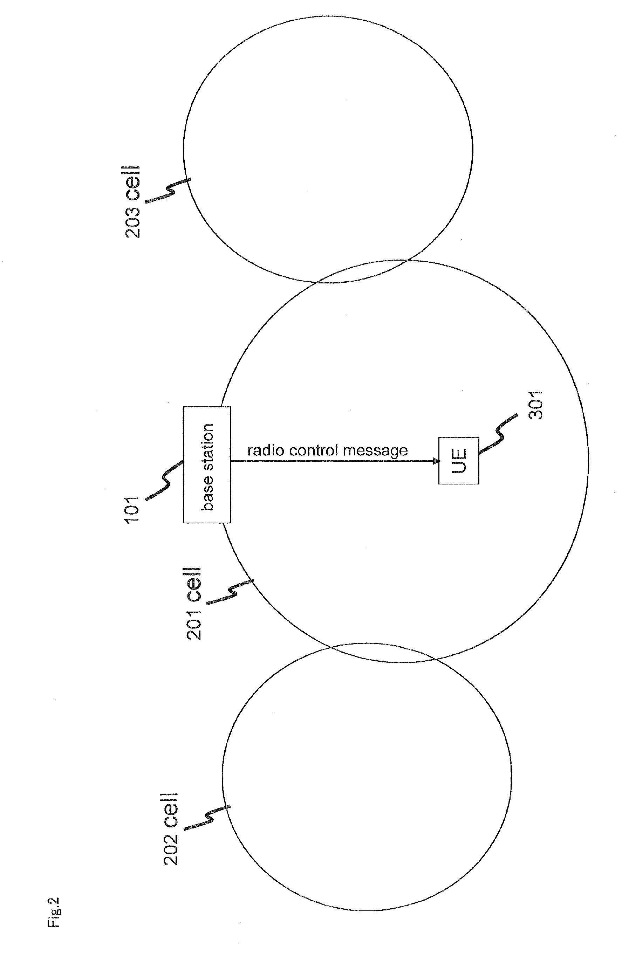

Figure 2 is a diagram showing a first exemplary embodiment of a communication system according to the present invention.

As shown in Figure 2, this exemplary embodiment includes base station 101 and UE 301. Cell 201 covered by base station 101 and cells 202 and 203 covered by other stations (not shown) are adjacent to each other.

Base station 101 is a radio base station that transmits a radio control message to UE 301 present in cell 201. In this exemplary embodiment, base station 101 is a small radio base station apparatus such as an HNB (Home Node B).

UE 301 is a communication terminal that has a radio communication function and receives a radio control message transmitted from base station 101. UE 301 may be a movable communication terminal.

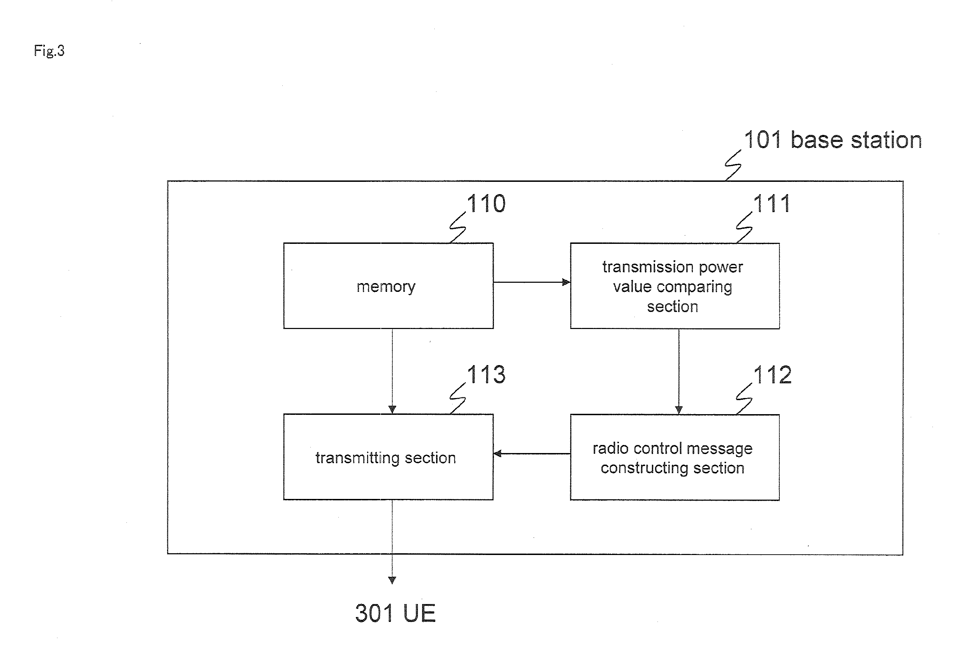

Figure 3 is a diagram showing an example of an internal configuration of base station 101 shown in Figure 2.

In base station 101 1 shown in Figure 2, as shown in Figure 3, memory 110, transmission power value comparing section 111, radio control message constructing section 112, and transmitting section 113 are provided.

Memory 110 stores a transmission power value set in advance as a value of transmission power of a Primary CPICH (primary common pilot channel), which is a reference signal.

Transmission power value comparing section 111 compares the transmission power value stored in memory 110 and a threshold set in advance. This threshold is "-10 [dBm]", which is a lower limit of a range of a transmission power value of the Primary CPICH specified by standardization.

When the transmission power value stored in memory 110 is equal to or larger than the threshold "-10 [dBm]" stored in memory 110 as a result of the comparison in transmission power value comparing section 111, radio control message constructing section 112 sets the transmission power value as a power value to be notified and constructs a radio control message. When the transmission power value stored in memory 110 is smaller than the threshold "-10 [dBm]", radio control message constructing section 112 sets the threshold "-10 [dBm]" as the power value to be notified, sets a value obtained by subtracting the threshold "-10 [dBm] "from the transmission power value stored in memory 110 as a supplementary power value (also referred to as compensation power value), and constructs a radio control message. For example, when the transmission power value stored in memory 110 is "-50 [dBm]", a value "-40 [dBm]" obtained by subtracting the threshold "-10 [dBm]" from the transmission power value "-50 [dBm]" is the supplementary power value.

To facilitate understanding, the threshold of "-10 [dBm]", which is the lower limit of the range of the transmission power value of the Primary CPICH specified by standardization, is used. However, the threshold is not limited to this. For example, the threshold may be a value specified by other standards or a transmission or reception power value other than the Primary CPICH.

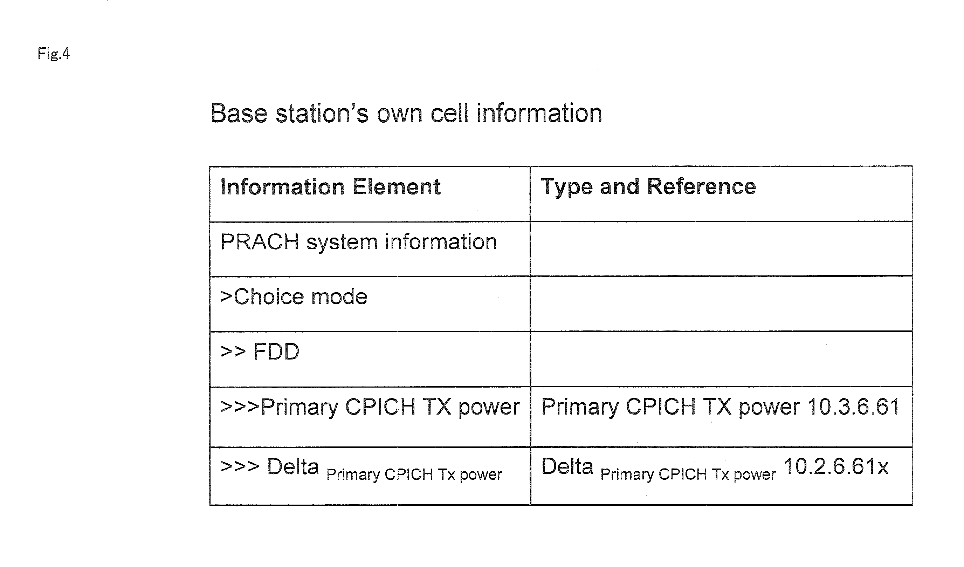

Figure 4 is a diagram showing a configuration example of parameters indicating own cell information of the radio control message constructed by radio control message constructing section 112 shown in Figure 3.

As shown in Figure 4, in information concerning an own cell (in the form shown in Figure 2, cell 201), a transmission power value of the Primary CPICH (Primary CPICH Tx Power) is indicated as a power value to be notified. This is specified in 3GPP TS25.331. Delta Primary CPICH Tx Power is indicated as a supplementary power value of the Primary CPICH. This is a characteristic of the present invention.

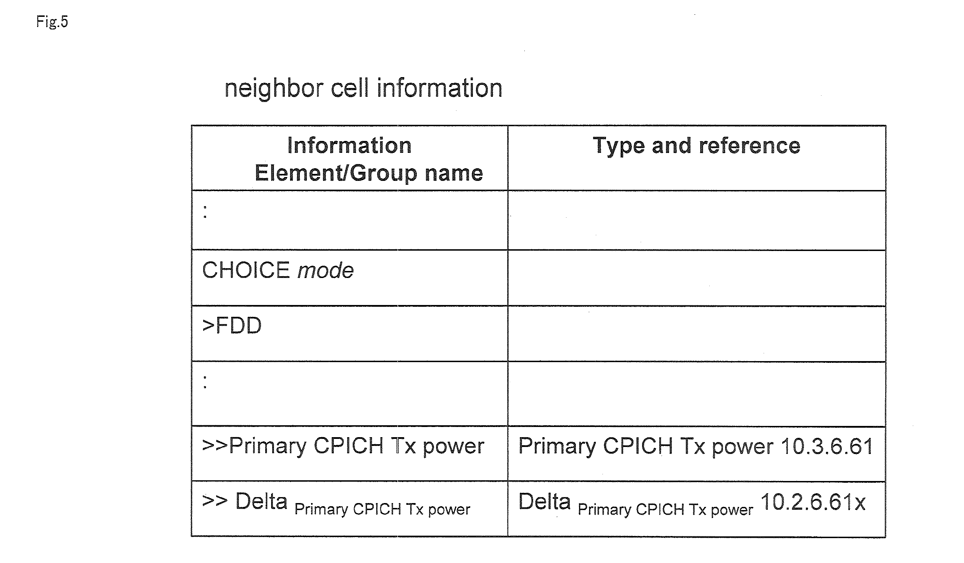

Figure 5 is a diagram showing a configuration example of parameters indicating neighbor cell information of the radio control message constructed by radio control message constructing section 112 shown in Figure 3.

As shown in Figure 5, in information concerning a neighbor cell (in the form shown in Figure 2, cell 202 or cell 203), a transmission power value of the Primary CPICH (Primary CPICH Tx Power) transmitted from a base station that covers the neighbor cell is indicated as a power value to be notified. This is specified in 3GPP TS25.331. Delta Primary CPICH Tx Power is indicated as a supplementary power value of the Primary CPICH. This is a characteristic of the present invention.

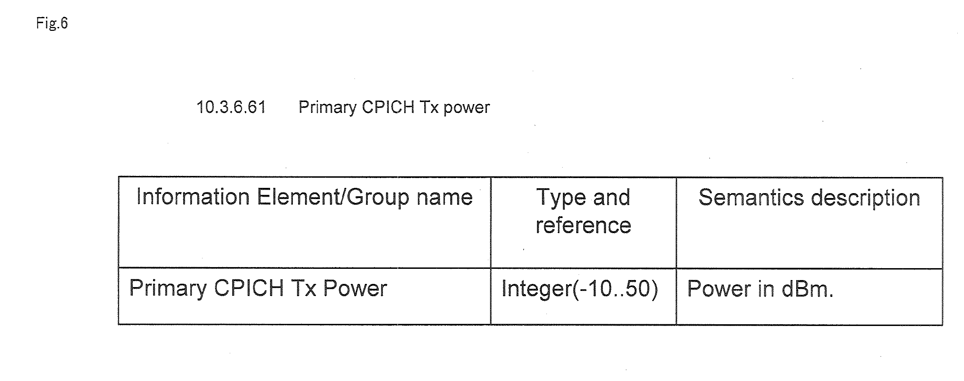

Figure 6 is a diagram showing a configuration example of parameters indicating a range of the transmission power value (Tx Power) of the Primary CPICH shown in Figures 4 and 5, included in the radio control message constructed by radio control message constructing section 112 shown in Figure 3.

As shown in Figure 6, the range of the transmission power value (Tx Power) of the Primary CPICH shown in Figures 4 and 5 is set to "-10 [dBm] to 50 [dBm]". This is specified in 3GPP TS25.331.

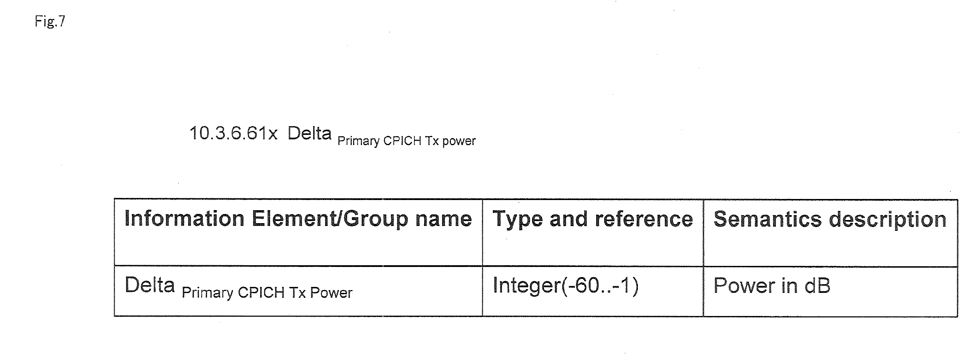

Figure 7 is a diagram showing a configuration example of parameters indicating a range of the Delta Primary CPICH Tx Power shown in Figures 4 and 5, included in the radio control message constructed by radio control message constructing section 112 shown in Figure 3.

As shown in Figure 7, the range of the Delta Primary CPICH Tx Power shown in Figures 4 and 5 is set to "-60 [dBm] to -1 [dBm]".

Transmitting section 113 transmits the radio control message constructed by radio control message constructing section 112 to UE 301 with transmission power indicated by the transmission power value stored in memory 110.

The radio control message is notification information broadcasted by the base station. The notification information includes at least one of information concerning the base station's own cell and the information concerning the neighbor cell. Specific examples of notification information are explained below.

Specific examples of the notification information including the information concerning the base station's own cell:
System information Block Type 5;
System information Block Type 5 bis; and
System information Block Type 6.
A specific example of the notification information including information concerning the neighbor cell:
System information Block Type 11.
The radio control message may be a Measurement Control message specified in 3GPP TS25.331. In this case, after RRC Connection is established between the communication terminal and the base station, the base station transmits the Measurement Control message to the communication terminal. At least one of information concerning the base station's own cell and the information concerning the neighbor cell explained above may be included in this Measurement Control message.

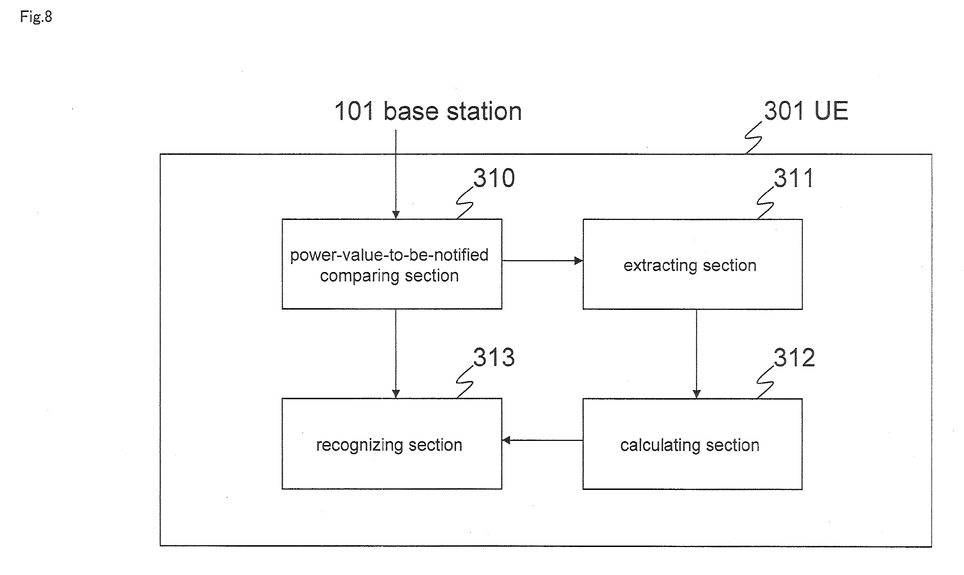

Figure 8 is a diagram showing an example of an internal configuration of UE 301 shown in Figure 2.

In UE 301 shown in Figure 2, as shown in Figure 8, power-value-to-be-notified comparing section 310, extracting section 311, calculating section 312, and recognizing section 313 are provided.

Power-value-to-be-notified comparing section 310 compares a power value to be notified transmitted from base station 101 and the threshold used in the comparison in transmission power value comparing section 111. When the power value to be notified and the threshold are different as a result of the comparison, power-value-to-be-notified comparing section 310 outputs the power value to be notified to recognizing section 313. When the power value to be notified and the threshold are the same as a result of the comparison, power-value-to-be-notified comparing section 310 outputs the radio control message to extracting section 311. Power-value-to-be-notified comparing section 310 may output the radio control message and the power value to be notified to extracting section 311.

When the radio control message is output from power-value-to-be-notified comparing section 310, extracting section 311 extracts the power value to be notified and the supplementary power value explained above from the radio control message. When the radio control message and the power value to be notified are output from power-value-to-be-notified comparing section 310, extracting section 311 extracts the supplementary power value explained above from the radio control message. Extracting section 311 outputs the extracted supplementary power value and the extracted power value to be notified to calculating section 312.

When the power value to be notified and the supplementary power value are output from extracting section 311, calculating section 312 adds the supplementary power value to the power value to be notified. Calculating section 312 outputs an added-up calculation value to recognizing section 313.

When the power value to be notified is output from power-value-to-be-notified comparing section 310, recognizing section 313 recognizes the power value to be notified as a transmission power value of the Primary CPICH. When the calculation value is output from calculating section 312, recognizing section 313 recognizes the calculation value as the transmission power value of the Primary CPICH.

A transmission power value notifying method in this exemplary embodiment is explained below. First, processing in base station 101 shown in Figure 2 is explained.

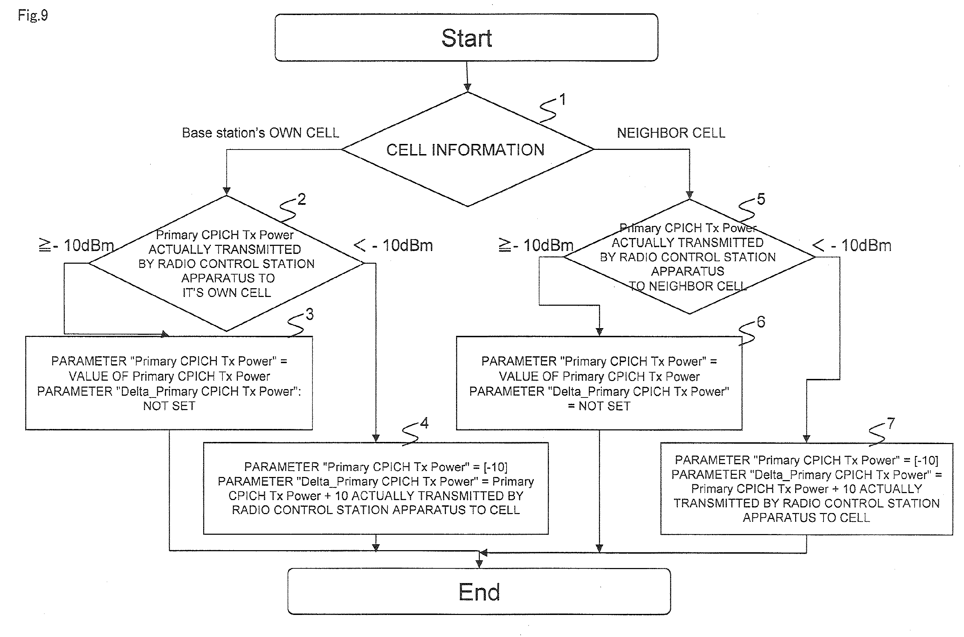

Figure 9 is a flowchart for explaining processing in base station 101 shown in Figure 2 in the transmission power value notifying method in this exemplary embodiment.

First, in step 1, it is determined whether cell information is the base station's own cell information or neighbor cell information. This is a step in which it is determined whether a transmission power value of the Primary CPICH notified to UE 301 is transmitted from base station 101 of the own cell or is transmitted from a base station of the neighbor cell.

When it is determined that the cell information is the base station's own cell information, in step 2, the transmission power value transmitted to the base station's own cell stored in memory 110 and the threshold set in advance are compared by transmission power value comparing section 111. As explained above, this threshold is "-10 [dBm]", which is the lower limit of the range of the transmission power value of the Primary CPICH. This transmission power value may be set by a host apparatus of base station 101 and written in memory 110 or may be written in memory 110 by an operator who operates base station 101. Base station 110 may acquire the transmission power value from a database, which is provided in another station and in which information concerning users is stored, at predetermined timing (e.g., during the start) and write the transmission power value in memory 110.

Then, a radio control message is constructed by radio control message constructing section 112 on the basis of a comparison result by transmission power value comparing section 111. Specifically, the radio control message is constructed as explained below.

When the transmission power value stored in memory 110 is equal to or larger than the threshold "-10 [dBm]" as a result of the comparison by transmission power value comparing section 111, in step 3, a radio control message is constructed in which the transmission power value is set as the Primary CPICH Tx Power explained with reference to Figure 4 and nothing is set as the Delta Primary CPICH Tx Power explained with reference to Figure 4. At this point, "0" may be set as the Delta Primary CPICH Tx Power.

On the other hand, when the transmission power value stored in memory 110 is a value smaller than the threshold "-10 [dBm]" as a result of the comparison by transmission power value comparing section 111, in step 4, a radio control message is constructed in which the threshold "-10 [dBm]" is set as the primary CPICH Tx Power explained with reference to Figure 4 and a value obtained by subtracting the threshold "-10 [dBm]" from the transmission power value is set as the Delta Primary CPICH Tx Power explained with reference to Figure 4.

The radio control message constructed in step 3 or step 4 is transmitted from transmitting section 113 to UE 301.

On the other hand, when it is determined in step 1 that the cell information is the neighbor cell information, in step 5, the transmission power value transmitted to the neighbor cell stored in memory 110 and a threshold set in advance are compared by transmission power value comparing section 111. As explained above, this threshold is "-10 [dBm]", which is the lower limit of the range of the transmission power value of the Primary CPICH. This transmission power value may be set by the host apparatus of base station 101 and written in memory 110 or may be written in memory 110 by the operator who operates base station 101. Base station 101 may acquire the transmission power value from a database, which is provided in another station and in which information concerning users is stored, at predetermined timing (e.g., during the start) and write the transmission power value in memory 110.

Then, a radio control message is constructed by radio control message constructing section 112 on the basis of a comparison result by transmission power value comparing section 111. Specifically, the radio control message is constructed as explained below.

When the transmission power value stored in memory 110 is equal to or larger than the threshold "-10 [dBm]" as a result of the comparison by transmission power value comparing section 111, in step 6, a radio control message is constructed in which the transmission power value is set as the Primary CPICH Tx Power explained with reference to Figure 5 and nothing is set as the Delta Primary CPICH Tx Power explained with reference to Figure 5. At this point, "0" may be set as the Delta Primary CPICH Tx Power.

On the other hand, when the transmission power value stored in memory 110 is a value smaller than the threshold "-10 [dBm]" as a result of the comparison by transmission power value comparing section 111, in step 7, a radio control message is constructed in which the threshold "-10 [dBm]" is set as the primary CPICH Tx Power explained with reference to Figure 5 and a value obtained by subtracting the threshold "-10 [dBm]" from the transmission power value is set as the Delta Primary CPICH Tx Power explained with reference to Figure 5.

The radio control message constructed in step 6 or step 7 is transmitted from transmitting section 113 to UE 301.

Processing in UE 301 shown in Figure 2 in the transmission power value notifying method in this exemplary embodiment is explained below.

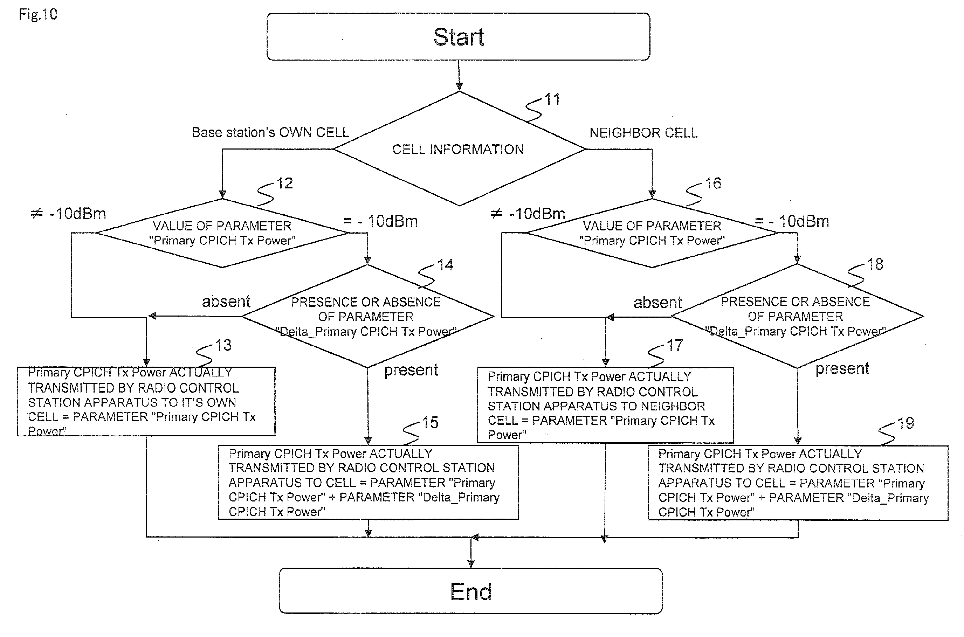

Figure 10 is a flowchart for explaining the processing in UE 301 shown in Figure 2 in the transmission power value notifying method in this exemplary embodiment.

First, in step 11, in a radio control message transmitted from base station 101, a message of the base station's own cell information and a message of neighbor cell information are separately processed. In the case of the message of the base station's own cell information, the parameters shown in Figure 4 are set. In the case of the message of the neighbor cell information, the parameters shown in Figure 5 are set.

In the case of the base station's own cell information, Primary CPICH Tx Power, which is a power value to be notified, included in the radio control message and a threshold are compared by power-value-to-be-notified comparing section 310 in step 12. This threshold is "-10 [dBm]", which is a lower limit of a range of a transmission power value of the Primary CPICH, same as that used in base station 101.

When the Primary CPICH Tx Power and the threshold "-10 [dBm]" are different as a result of the comparison by power-value-to-be-notified comparing section 310, the Primary CPICH Tx Power is output to recognizing section 313. In step 13, in recognizing section 313, it is recognized that the Primary CPICH Tx Power output from power-value-to-be-notified comparing section 310 is a transmission power value of the Primary CPICH transmitted from base station 101 to the base station's own cell.

On the other hand, when the Primary CPICH Tx Power and the threshold "-10 [dBm]" are the same as a result of the comparison by power-value-to-be-notified comparing section 310, the radio control message is output to extracting section 311. The radio control message and the Primary CPICH Tx Power may be output from power-value-to-be-notified comparing section 310 to extracting section 311.

Then, Delta Primary CPICH Tx Power, which is a supplementary power value, is extracted by extracting section 311 from the radio control message output from power-value-to-be-notified comparing section 310. In step 14, it is determined by extracting section 311 whether the Delta Primary CPICH Tx Power is absent (cannot be extracted) or whether "0" is set as the Delta Primary CPICH Tx Power.

When it is determined that the Delta Primary CPICH Tx Power is absent (cannot be extracted) or that "0" is set as the Delta Primary CPICH Tx Power, processing in step 13 is performed.

On the other hand, when it is determined that the Delta Primary CPICH Tx Power is present (can be extracted) and that a value other than "0" is set as the Delta Primary CPICH Tx Power, the Primary CPICH Tx Power and the Delta Primary CPICH Tx Power are output to calculating section 312.

Then, the Delta Primary CPICH Tx Power is added to the Primary CPICH Tx Power output from extracting section 311 by calculating section 312. An added-up calculation value is output from calculating section 312 to recognizing section 313.

In recognizing section 313, in step 15, it is recognized that the calculation value output from calculating section 312 is a transmission power value of the Primary CPICH transmitted from base station 101 to the base station's own cell.

On the other hand, when the radio control message is processed as neighbor cell information in step 11, in step 16, the Primary CPICH Tx Power, which is the power value to be notified, included in the radio control message and a threshold are compared by power-value-to-be-notified comparing section 310. This threshold is "-10 [dBm]", which is a lower limit of a range of a transmission power value of the Primary CPICH, same as that used in base station 101.

When the Primary CPICH Tx Power and the threshold "-10 [dBm]" are different as a result of the comparison by power-value-to-be-notified comparing section 310, the Primary CPICH Tx Power is output to recognizing section 313. In step 17, in recognizing section 313, it is recognized that the Primary CPICH Tx Power output from power-value-to-be-notified comparing section 310 is a transmission power value of the Primary CPICH transmitted from base station 101 to the neighbor cell.

On the other hand, when the Primary CPICH Tx Power and the threshold "-10 [dBm]" are the same as a result of the comparison by power-value-to-be-notified comparing section 310, the radio control message is output to extracting section 311. The radio control message and the Primary CPICH Tx Power may be output from power-value-to-be-notified comparing section 310 to extracting section 311.

Then, Delta Primary CPICH Tx Power, which is a supplementary power value, is extracted by extracting section 311 from the radio control message output from power-value-to-be-notified comparing section 310. In step 18, it is determined by extracting section 311 whether the Delta Primary CPICH Tx Power is absent (cannot be extracted) or whether "0" is set as the Delta Primary CPICH Tx Power.

When it is determined that the Delta Primary CPICH Tx Power is absent (cannot be extracted) or that "0" is set as the Delta Primary CPICH Tx Power, processing in step 17 is performed.

On the other hand, when it is determined that the Delta Primary CPICH Tx Power is present (can be extracted) and that a value other than "0" is set as the Delta Primary CPICH Tx Power, the Primary CPICH Tx Power and the Delta Primary CPICH Tx Power are output to calculating section 312.

Then, the Delta Primary CPICH Tx Power is added to the Primary CPICH Tx Power output from extracting section 311 by calculating section 312. An added-up calculation value is output from calculating section 312 to recognizing section 313.

In recognizing section 313, in step 19, it is recognized that the calculation value output from calculating section 312 is a transmission power value of the Primary CPICH transmitted from base station 101 to the neighbor cell.

A method of setting the parameters explained above is explained below.

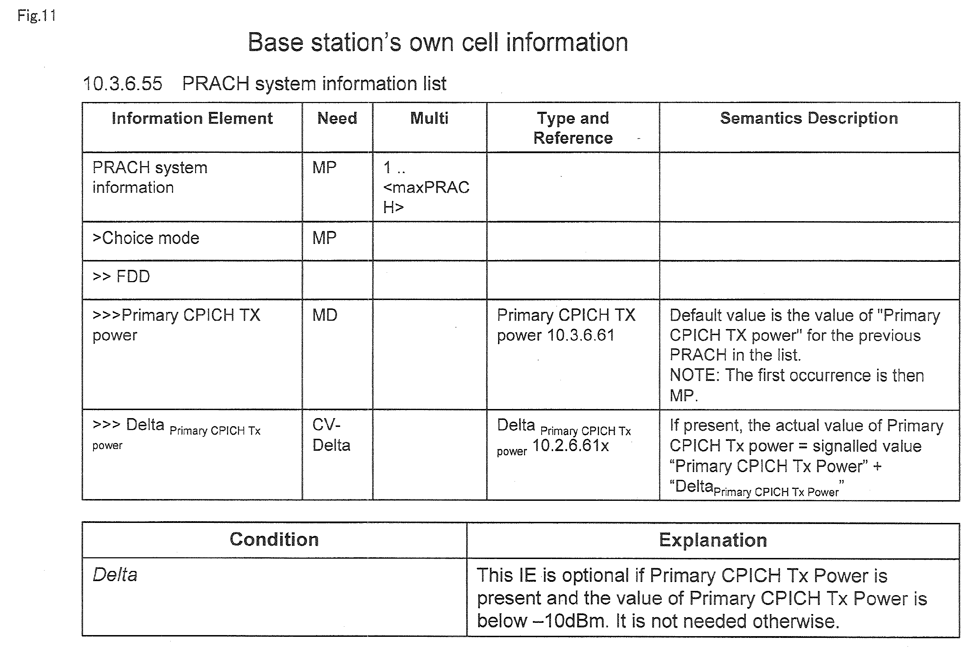

Figures 11 to 13 are diagrams for explaining an example of the method of setting the parameters explained above. The method of setting the parameters is described in an expression conforming to TS25.331.

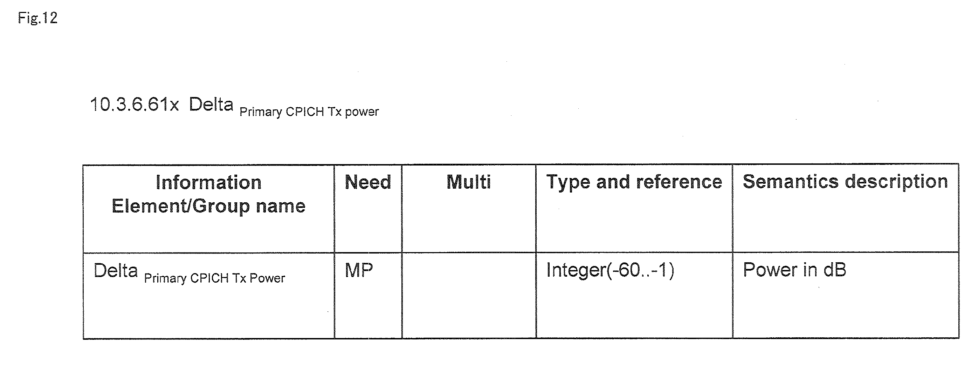

As shown in Figures 11 and 12, a parameter Delta Primary CPICH Tx Power is set valid only when a parameter Primary CPICH Tx Power is set and a value of a parameter Primary CPICH Tx Power is "-10 [dBm]". Otherwise, setting of the parameter Delta Primary CPICH Tx Power is unnecessary.

When the parameter Primary CPICH Tx Power is not set, a value of Primary CPICH Tx Power corresponding to PRACH System Information set before is applied (see TS25.331).

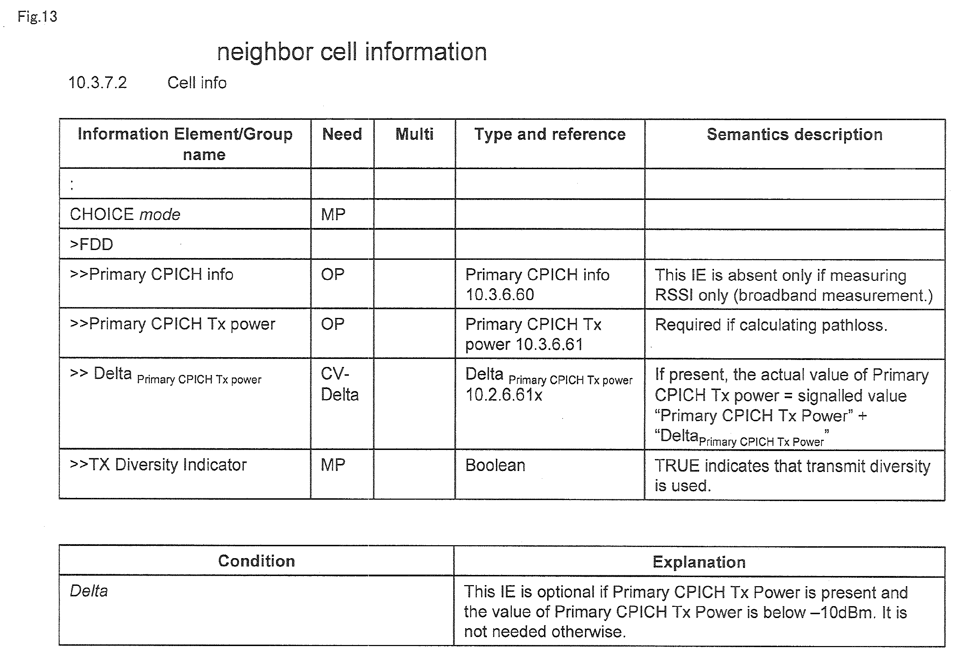

As shown in Figure 13, the parameter Delta Primary CPICH Tx Power is set valid only when the parameter Primary CPICH Tx Power is set and a value of the Primary CPICH Tx Power is "-10 [dBm]". Otherwise, setting of the parameter Delta Primary CPICH Tx Power is unnecessary.

The parameter Primary CPICH Tx Power is a parameter required in calculation of Pathloss. When the parameter Primary CPICH Tx Power is not set, a radio communication measurement condition in which it is unnecessary to set the parameter Primary CPICH Tx Power in a relevant neighbor cell is applied (see TS25.331).

The parameter Delta Primary CPICH Tx Power shown in Figure 13 indicates Chapter 10.3.6.61x shown in Figure 12.

### (Second Exemplary embodiment)

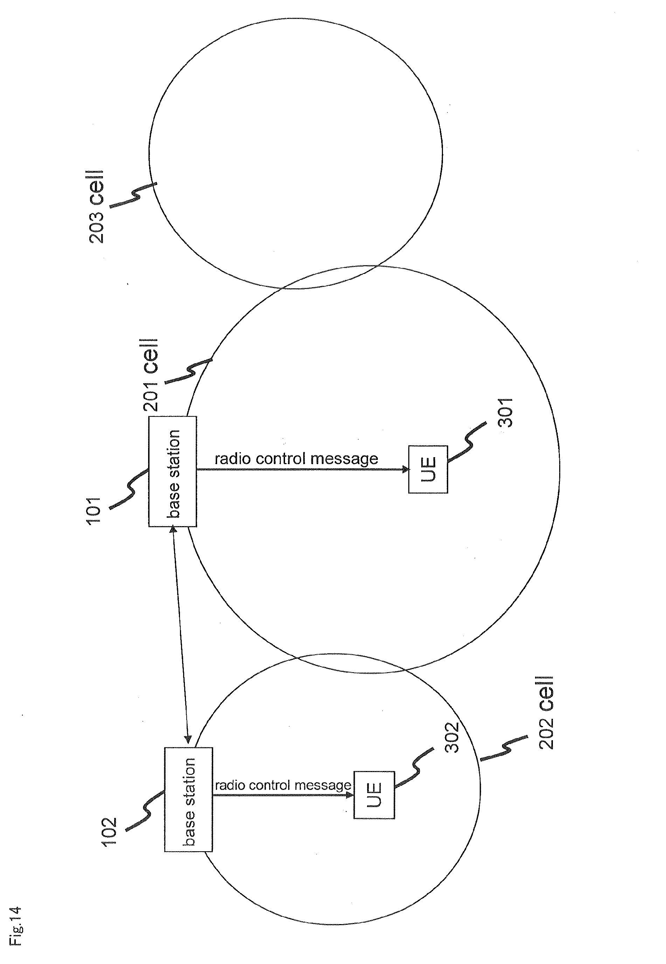

Figure 14 is a diagram showing a second exemplary embodiment of the communication system according to the present invention.

As shown in Figure 14, this exemplary embodiment includes base stations 101 and 102 and UEs 301 and 302. Cell 202 covered by base station 102 and cell 203 covered by another base station (not shown) are adjacent to cell 201 covered by base station 101.

Base station 101 is a radio base station that transmits a radio control message to base station 102 and UE 301 present in cell 201.

Base station 102 is a radio base station that transmits a radio control message to base station 101 and UE 302 present in cell 202.

UE 301 is a communication terminal that includes a radio communication function and receives the radio control message transmitted from base station 101. UE 301 may be a movable communication terminal.

UE 302 is a communication terminal that includes a radio communication function and receives the radio control message transmitted from base station 102. UE 302 may be a movable communication terminal.

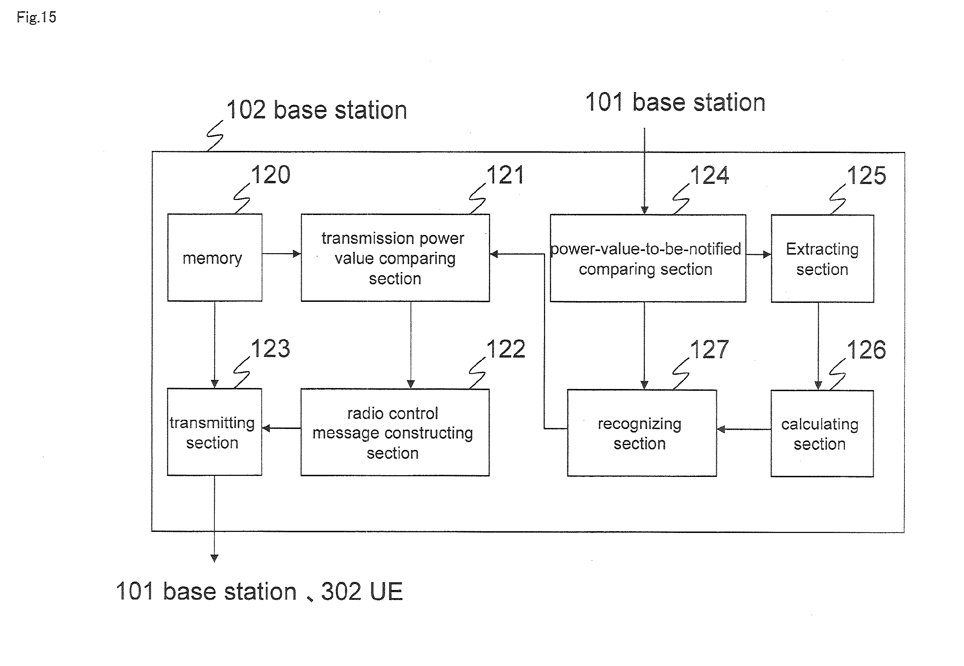

Figure 15 is a diagram showing an example of an internal configuration of base station 102 shown in Figure 14.

In base station 102 shown in Figure 14, as shown in Figure 15, memory 120, transmission power value comparing section 121, radio control message constructing section 122, transmitting section 123, power-value-to-be-notified comparing section 124, extracting section 125, calculating section 126, and recognizing section 127 are provided.

Memory 120 is the same as memory 110 shown in Figure 3.

In addition to the functions of transmission power value comparing section 11 shown in Figure 3, transmission power value comparing section 121 compares a transmission power value output from recognizing section 127 and a threshold set in advance. This threshold is "-10 [dBm]", which is a lower limit of a range of a transmission power value of the Primary CPICH specified by standardization.

Radio control message constructing section 122 is the same as radio control message constructing section 112 shown in Figure 3.

Transmitting section 123 is the same as transmitting section 113 shown in Figure 3.

Power-value-to-be-notified comparing section 124 is the same as power-value-to-be-notified comparing section 310 shown in Figure 8.

Extracting section 125 is the same as extracting section 311 shown in Figure 8.

Calculating section 126 is the same as calculating section 312 shown in Figure 8.

In addition to the functions of recognizing section 313 shown in Figure 8, recognizing section 127 outputs a recognized transmission power value to transmission power value comparing section 121.

By adopting such a configuration, base station 102 can recognize a transmission power value from base station 101, which is an adjacent base station that covers cell 201 adjacent to cell 202, and can notify UE 302 of the recognized transmission power value from base station 101. Consequently, UE 302 can recognize transmission power value from base station 101 of neighbor cell 201.

It goes without saying that base station 101 may include a configuration that is same as that of base station 102.

### (Third Exemplary embodiment)

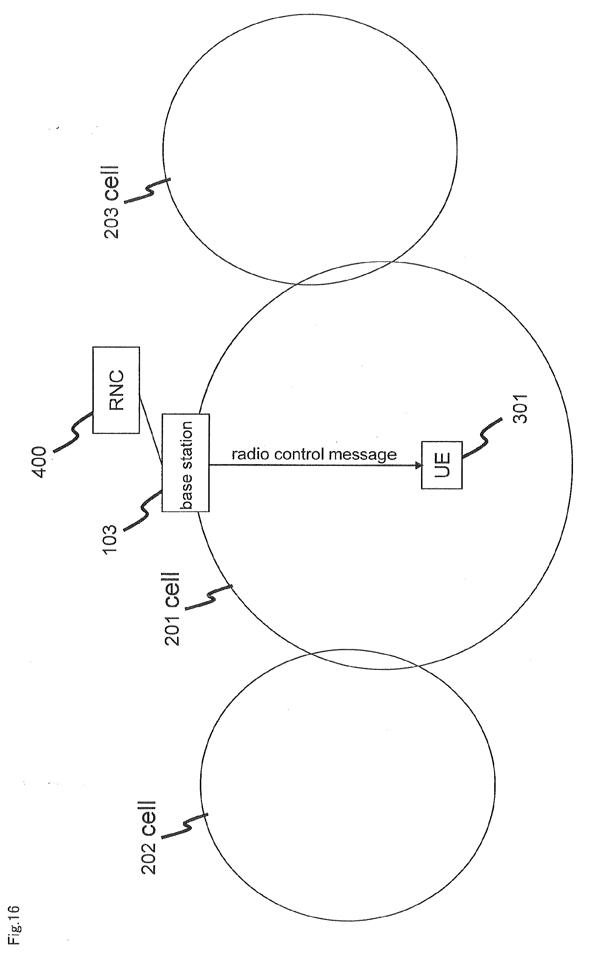

Figure 16 is a diagram showing a third exemplary embodiment of the communication system according to the present invention.

As shown in Figure 16, this exemplary embodiment includes RNC 400, base station 103, and UE 301. Cell 201 covered by base station 101 and cells 202 and 203 covered by other base stations (not shown) are adjacent to each other.

RNC 400 is a radio base station control apparatus that controls base station 103. RNC 400 controls base station 103 using an NBAP (Node B Application Part) signal, which is a radio link setting procedure, as a transmission message transmitted to base station 103.

Base station 103 is a radio base station that transmits a radio control message to UE 301 present in cell 201. In this exemplary embodiment, base station 103 is a general radio base station apparatus like an NB (Node B).

UE 301 is a communication terminal that includes a radio communication function and receives the radio control message transmitted from base station 103. UE 301 may be a movable communication terminal.

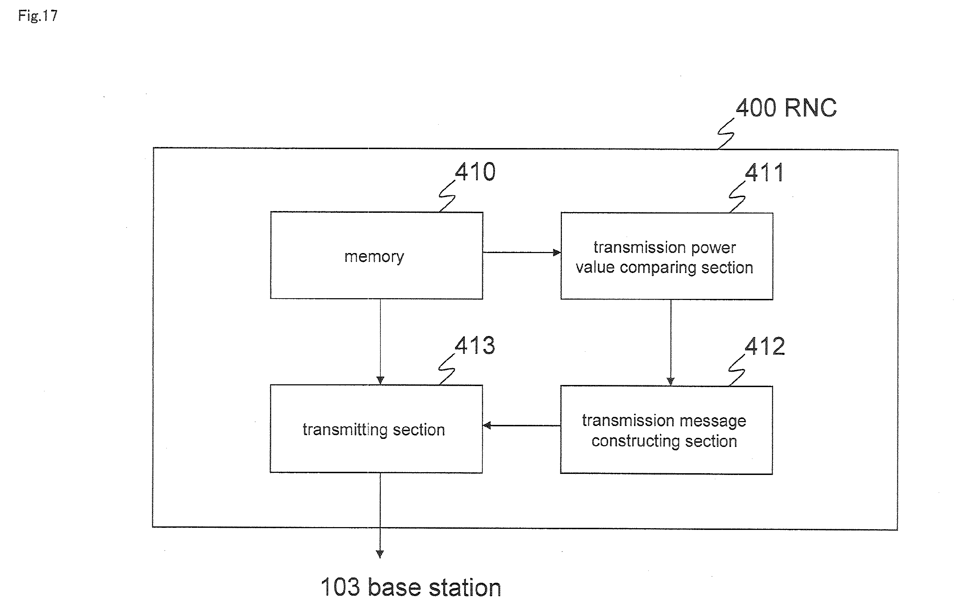

Figure 17 is a diagram showing an example of an internal configuration of RNC 400 shown in Figure 16.

In RNC 400 shown in Figure 16, as shown in Figure 17, memory 410, transmission power value comparing section 411, transmission message constructing section 412, and transmitting section 413 are provided.

Memory 410 stores a transmission power value set in advance as a value of power transmission of the Primary CPICH.

Transmission power value comparing section 411 compares the transmission power value stored in memory 410 and a threshold set in advance. This threshold is a lower limit value of a range in which the transmission power value can be set as a power value to be notified in the NBAP signal (hereinafter referred to as first threshold) explained above.

When the transmission power value stored in memory 410 is equal to or larger than the first threshold as a result of the comparison in transmission power value comparing section 111, transmission message constructing section 412 sets the transmission power value as a first power value to be notified and constructs an NBAP signal. When the transmission power value stored in memory 410 is smaller than the first threshold, transmission message constructing section 412 sets the first threshold as a power value to be notified, sets a value obtained by subtracting the first threshold from the transmission power value stored in memory 410 as a first supplementary power value, and constructs an NBAP signal. For example, when the transmission power value stored in memory 410 is "-100 [dBm]" and the first threshold is "-10 [dBm]", a value "-90 [dBm]" obtained by subtracting the first threshold "-10 [dBm]" from the transmission power value "-100 [dBm]" is the first supplementary power value.

The first power value to be notified is a parameter in an NBAP signal equivalent to the Primary CPICH Tx Power explained in the first exemplary embodiment. The first supplementary power value is a parameter in an NBAP signal equivalent to the Delta Primary CPICH Tx Power explained in the first exemplary embodiment.

Transmitting section 413 transmits the NBAP signal constructed by transmission message constructing section 412 to base station 103.

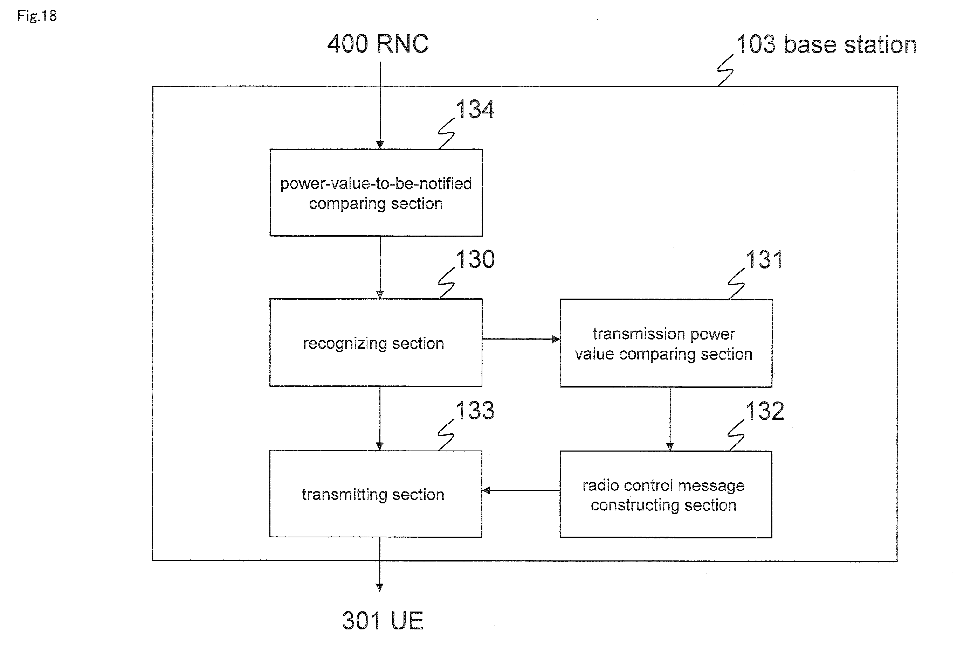

Figure 18 is a diagram showing an example of an internal configuration of base station 103 shown in Figure 16.

In base station 103 shown in Figure 16, as shown in Figure 18, power-value-to-be-notified comparing section 134, recognizing section 130, transmission power value comparing section 131, radio control message constructing section 132, and transmitting section 133 are provided.

Power-value-to-be-notified comparing section 134 compares the first power value to be notified and the first threshold from the NBAP signal transmitted from RNC 400. Power-value-to-be-notified comparing section 134 outputs a comparison result to recognizing section 130.

Recognizing section 130 recognizes a transmission power value on the basis of the comparison result output from power-value-to-be-notified comparing section 134 using the first power value to be notified and the first supplementary power value. A specific recognizing method is explained below.

When the comparison result indicates that the first power value to be notified and the first threshold are different, recognizing section 130 recognizes the first power value to be notified as a transmission power value. On the other hand, when the comparison result indicates that the first power value to be notified and the first threshold are the same, recognizing section 130 recognizes a value obtained by adding the first supplementary power value to the first power value to be notified as a transmission power value.

Recognizing section 130 outputs the recognized transmission power value to transmitting section 133 and transmission power value comparing section 131.

Transmission power value comparing section 131 compares the transmission power value output from recognizing section 130 and a second threshold set in advance. This second threshold is "-10 [dBm]", which is a lower limit of a range of a transmission power value of the Primary CPICH specified by standardization. Transmission power value comparing section 131 outputs a comparison result to radio control message constructing section 132.

When the transmission power value output from recognizing section 130 is equal to or larger than the second threshold "-10 [dBm]" as a result of the comparison in transmission power value comparing section 131, radio control message constructing section 132 sets the transmission power value as a second power value to be notified and constructs a radio control message. When the transmission power value output from recognizing section 130 is smaller than the second threshold "-10 [dBm]", radio control message constructing section 132 sets the second threshold "-10 [dBm]" as the second power value to be notified, sets a value obtained by subtracting the second threshold "-10 [dBm]" from the transmission power value output from recognizing section 130 as a second supplementary power value, and constructs a radio control message. For example, when the transmission power value output from recognizing section 130 is "-100 [dBm]", a value "-90 [dBm]" obtained by subtracting the threshold "-10 [dBm]" from the transmission power value "-100 [dBm]" is the second supplementary power value.

Transmitting section 133 transmits the radio control message constructed by radio control message constructing section 132 to UE 301 with transmission power indicated by the transmission power value output from recognizing section 130.

In this way, in the third exemplary embodiment, notification of the transmission power value between RNC 400 and base station 103 is arranged in the same manner as the notification of the transmission power value between base station 103 and UE 301 using an existing signal (in this exemplary embodiment, the NBAP). Consequently, the existing signal can be set to be lower than a specified setting range.

In the first to third exemplary embodiments, a method of extending the setting range of the Primary CPICH Tx Power is also conceivable.

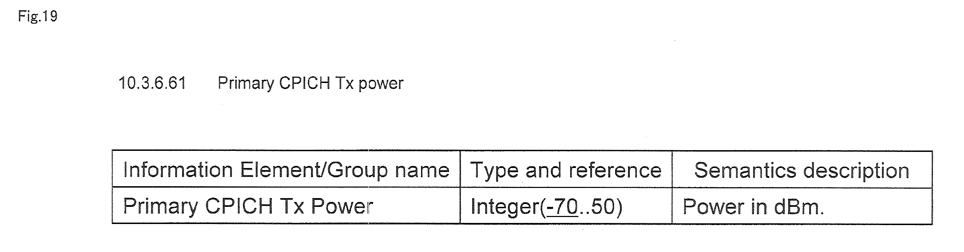

Figure 19 is a diagram showing an example of parameters in the case in which the setting range of Primary CPICH Tx Power is extended.

As shown in Figure 19, the setting range of the Primary CPICH Tx Power may be extended to -70 [dBm] to 50 [dBm].

When the transmission power value is smaller than a lower limit of the setting range of the Primary CPICH Tx Power, the Primary CPICH Tx Power may be set using other parameters.

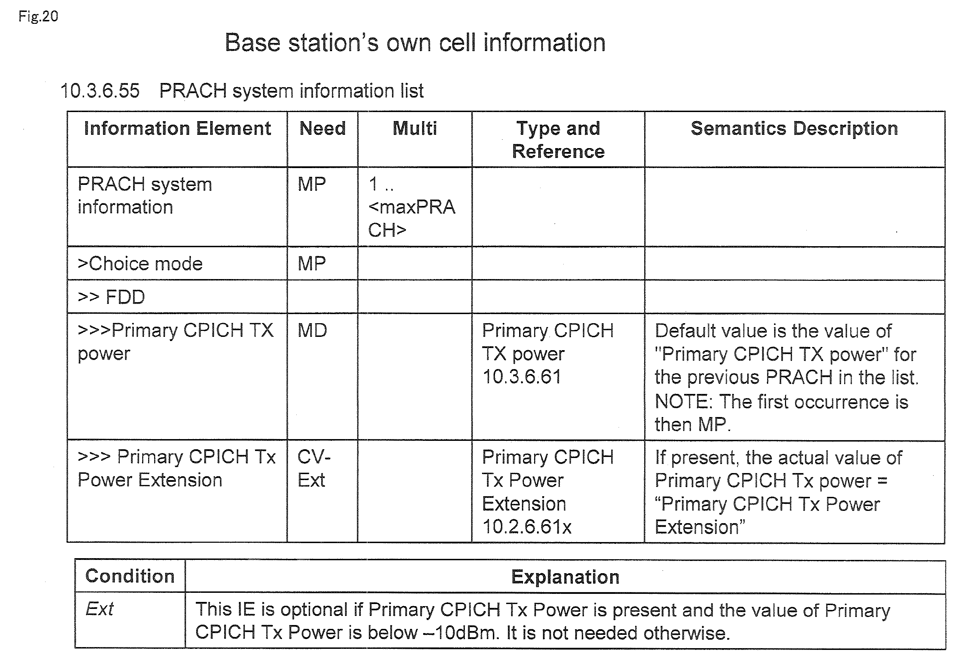

Figures 20 to 22 are diagrams for explaining an example of a method of setting the parameters that are used when the transmission power value is smaller than the lower limit of the setting range of the Primary CPICH Tx Power.

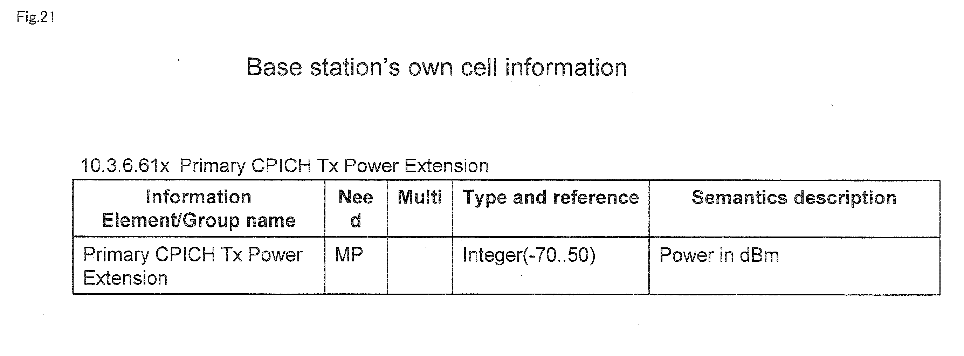

As shown in Figures 20 and 21, a parameter Primary CPICH Tx Power Extension is set as valid only when the parameter Primary CPICH Tx Power is set and the value of the parameter Primary CPICH Tx Power is "-10 [dBm]". Otherwise, setting of the parameter Primary CPICH Tx Power Extension is unnecessary. A setting range of the parameter Primary CPICH Tx Power Extension is -70 [dBm] to 50 [dBm].

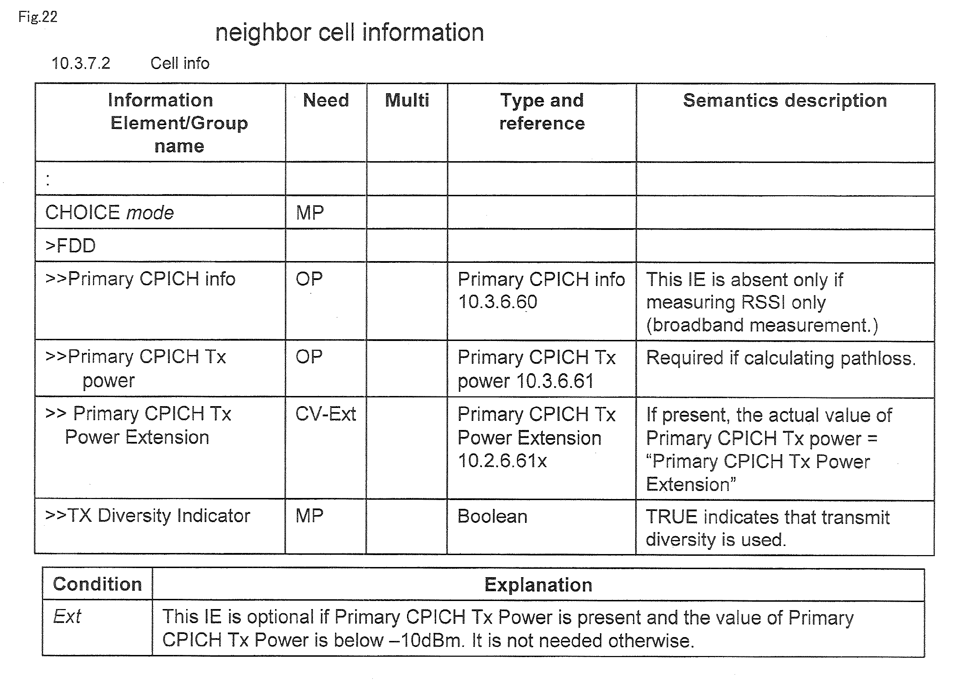

As shown in Figure 22, the parameter Primary CPICH Tx Power Extension is set valid only when the parameter Primary CPICH Tx Power is set and the value of the parameter Primary CPICH Tx Power is "-10 [dBm]". Otherwise, setting of the parameter Primary CPICH Tx Power Extension is unnecessary. The setting range of the parameter Primary CPICH Tx Power Extension is -70 [dBm] to 50 [dBm].

The parameter Primary CPICH Tx Power Extension shown in Figure 22 indicates the Chapter 10.3.6.61x shown in Figure 21.

A basic configuration of the form explained above is a configuration for a WCDMA (Wideband Code Division Multiple Access) system conforming to TS25.331. However, concerning the method of setting a minimum transmission power value, the basic configuration is applicable in E-UTRAN (TS36.331) as well.

### (Fourth Exemplary embodiment)

In the exemplary embodiments explained above, the exemplary embodiments are applied to the small radio base station apparatus such as the HNB (Home Node B) including a femtocell.

On the other hand, in a fourth exemplary embodiment, the exemplary embodiment is applied to a base station apparatus including a macrocell. In this case, as in the exemplary embodiments explained above, for example, the parameters only have to be set in a radio control message (System Information) transmitted (broadcasted) to the macrocell.

As explained above, in the present invention, effects explained below are realized.

A first effect is that, since a radio base station includes setting means for setting a transmission power value to be smaller than a minimum value of the Primary CPICH Tx Power, it is possible to set small transmission power in a small radio base station.

A second effect is that, since the radio base station includes the setting means for setting the transmission power value to be smaller than the minimum value of the Primary CPICH Tx Power, it is possible to set small transmission power in the radio base station in a saving mode.

A third effect is that, since the radio base station can transmit a setting value that is smaller than the minimum value of the Primary CPICH Tx Power to the communication terminal, the communication terminal can learn the setting value of transmission power and the transmission power value actually transmitted by the radio base station.

A fourth effect is that, since small transmission power can be set using the parameter Delta Primary CPICH Tx Power that is valid only when the existing parameter Primary CPICH Tx Power is a minimum value, it is possible to reduce the impact of a minimum power difference on an existing radio communication node (e.g., a mobile terminal or a small radio base station) that cannot recognize the parameter Delta Primary CPICH Tx Power.

A fifth effect is that, since a setting value that is smaller than the minimum value of the Primary CPICH Tx Power transmitted by the radio base station can be notified to the communication terminal, it is also possible to suppress uplink transmission power transmitted by the communication terminal and it is possible to realize power saving for the communication terminal.

In the exemplary embodiments explained above, when the transmission power value and the threshold are the same, 0 (zero) is set as the compensation power value and the compensation power value and the power value to be notified is transmitted to the communication terminal. However, the parameters themselves of the compensation power value do not have to be set. When the parameters of the compensation power value are not set, the communication terminal recognizes that the compensation power value is 0.

In the exemplary embodiments explained above, the processing in base stations 101 to 103, UE 301, and RNC 400 explained above may be performed by logical circuits respectively manufactured according to purposes. Programs describing the processing of content as procedures may be recorded in recording media readable in base stations 101 to 103, UE 301, and RNC 400. Base stations 101 to 103, UE 301, and RNC 400 may be caused to respectively read the programs and execute the programs. The recording media readable in base stations 101 to 103, UE 301, and RNC 400 indicate memories such as a ROM or a RAM, a HDD, or the like respectively incorporated in base stations 101 to 103, UE 301, and RNC 400 besides removable recording media such as a floppy disk (registered trademark), a magneto-optical disk, a DVD, or a CD. The programs recorded in the recording medium are respectively read by CPUs (not shown) in base stations 101 to 103, UE 301, and RNC 400. Processing that is the same as that explained above is performed according to the control by the CPUs. The CPUs operate as computers in which programs are read from the recording media that recorded the prgrams.

It goes without saying that the present invention is not limited only to the exemplary embodiments explained above and various changes are possible without departing from the spirit of the present invention explained above.

The invention of this application is explained with reference to the exemplary embodiments. However, the present invention is not limited to the exemplary embodiments. Various changes that those skilled in the art can understand can be applied to the configurations and the details of the invention of this application within the scope of the invention of this application.

This application claims the priority based on Japanese Patent Application No. 2009-106823 filed on April, 24, 2009; the entire contents thereof are incorporated herein by reference.

## Claims

1. A communication system comprising: a communication terminal; and a radio base station that transmits a reference signal to said communication terminal, wherein
said radio base station sets, when a transmission power value set in advance as a value of transmission power of the reference signal is smaller than a threshold set in advance, the threshold as a power value to be notified, sets a value obtained by subtracting the threshold from the transmission power value as a compensation power value, and transmits the power value to be notified and the compensation power value to said communication terminal, and
said communication terminal receives the power value to be notified and the compensation power value.

2. The communication system according to claim 1, wherein said radio base station sets, when the transmission power value and the threshold are the same, 0 as the compensation power value and transmits the compensation power value and the power value to be notified to said communication terminal using the transmission power.

3. The communication system according to claim 1, wherein
said radio base station transmits the power value to be notified and the compensation power value to a neighbor radio base station that covers a cell covered by said radio base station and a cell adjacent to the cell, and
said neighbor radio base station recognizes, when the power value to be notified transmitted from said radio base station is larger than the threshold, the power value to be notified as the transmission power value of the reference signal transmitted from said radio base station and recognizes, when the power value to be notified transmitted from said radio base station and the threshold are the same, a value obtained by adding up the compensation power value and the power value to be notified transmitted from said radio base station as the transmission power value of the reference signal transmitted from said radio base station.

4. The communication system according to claim 1, wherein said communication terminal recognizes, even if the power value to be notified transmitted from said radio base station and the threshold are the same, the power value to be notified as the transmission power value of the reference signal transmitted from said radio base station.

5. The communication system according to any one of claims 1 to 4, wherein the reference signal is a primary common pilot channel.

6. A communication system comprising: a communication terminal including a radio communication function; a radio base station that performs radio communication with said communication terminal and transmits a signal of a primary common pilot channel to said communication terminal; and a radio base station control apparatus that controls said radio base station, wherein
said radio base station control apparatus transmits, when a transmission power value set in advance as a value of transmission power of the primary common pilot channel is equal to or larger than a first threshold set in advance, the transmission power value to said radio base station as a first power value to be notified and sets, when the transmission power value is smaller than the first threshold, the first threshold as the first power value to be notified, sets a value obtained by subtracting the first threshold from the transmission power value as a first compensation power value, and transmits the first power value to be notified and the first compensation power value to said radio base station,
said radio base station recognizes, when the first power value to be notified transmitted from said radio base station control apparatus and the first threshold are different, the first power value to be notified as the transmission power value of the primary common pilot channel transmitted from said radio base station, recognizes, when the first power value to be notified transmitted from said radio base station control apparatus and the first threshold are the same, a value obtained by adding up the first compensation power value and the first power value to be notified transmitted from said radio base station control apparatus as the transmission power value of the primary common pilot channel transmitted from said radio base station, transmits, when the recognized transmission power value is equal to or larger than a second threshold set in advance, using the transmission power, the transmission power value to said communication terminal as a second power value to be notified, and sets, when the transmission power value is smaller than the second threshold, the second threshold as the second power value to be notified, sets a value obtained by subtracting the second threshold from the transmission power value as a second compensation power value, and transmits the second power value to be notified and the second compensation power value to said communication terminal using the transmission power, and
said communication terminal recognizes, when the second power value to be notified transmitted from said radio base station and the second threshold are different, the second power value to be notified as the transmission power value of the primary common pilot channel transmitted from said radio base station and recognizes, when the second power value to be notified transmitted from said radio base station and the second threshold are the same, a value obtained by adding up the second compensation power value and the second power value to be notified transmitted from said radio base station as the transmission power value of the primary common pilot channel transmitted from said radio base station.

7. A radio base station that performs radio communication with a communication terminal including a radio communication function and transmits a signal of a primary common pilot channel to said communication terminal, said radio base station comprising:
a memory that stores a transmission power value set in advance as a value of transmission power of the primary common pilot channel;
a transmission power value comparing section that compares the transmission power value stored in said memory and a threshold set in advance;
a radio control message constructing section that sets, when the transmission power value is equal to or larger than the threshold as a result of the comparison in said transmission power value comparing section, the transmission power value as a power value to be notified, sets, when the transmission power value is smaller than the threshold, the threshold as the power value to be notified and sets a value obtained by subtracting the threshold from the transmission power value as a compensation power value, and constructs a radio control message including the power value to be notified and the compensation power value; and
a transmitting section that transmits the radio control message constructed by said radio control message constructing section to said communication terminal using the transmission power.

8. The radio base station according to claim 7, wherein said radio control message constructing section sets, when the transmission power value and the threshold are the same as a result of the comparison in said transmission power value comparing section, 0 as the compensation power value.

9. The radio base station according to claim 7, wherein
said transmitting section transmits the radio control message to a neighbor radio base station that covers a cell covered by said radio base station and a cell adjacent to the cell, and
said radio base station further comprises:
a power-value-to-be-notified comparing section that compares, when the radio control message is transmitted from said neighbor radio base station, the power value to be notified included in the transmitted radio control message and the threshold; and
a recognizing section that recognizes, when the power value to be notified and the threshold are different as a result of the comparison in said power-value-to-be-notified comparing section, the power value to be notified as a transmission power value of the primary common pilot channel transmitted from said neighbor radio base station and recognizes, when the power value to be notified and the threshold are the same, a value obtained by adding up the compensation power value and the power value to be notified included in the radio control message as the transmission power value of the primary common pilot channel transmitted from said neighbor radio base station.

10. A radio base station that performs radio communication with a communication terminal including a radio communication function and transmits a signal of a primary common pilot channel to said communication terminal, said radio base station comprising:
a power-value-to-be-notified comparing section that compares a first power value to be notified transmitted from a radio base station control apparatus, which controls said radio base station, and a first threshold set in advance;
a recognizing section that recognizes, when the first power value to be notified and the first threshold are different as a result of the comparison in said power-value-to-be-notified comparing section, the first power value to be notified as the transmission power value of the primary common pilot channel transmitted from said radio base station and recognizes, when the first power value to be notified and the first threshold are the same, a value obtained by adding up the first compensation power value and the first power value to be notified transmitted from said radio base station control apparatus as the transmission power value of the primary common pilot channel transmitted from said radio base station;
a transmission power value comparing section that compares the transmission power value recognized by said recognizing section and a second threshold set in advance;
a radio control message constructing section that sets, when the transmission power value is equal to or larger than the second threshold as a result of the comparison in said transmission power value comparing section, the transmission power value as a second power value to be notified, sets, when the transmission power value is smaller than the second threshold, the second threshold as the second power value to be notified and sets a value obtained by subtracting the second threshold from the transmission power value as a second compensation power value, and constructs a radio control message including the second power value to be notified and the second compensation power value; and
a transmitting section that transmits the radio control message constructed by said radio control message constructing section to said communication terminal using the transmission power.

11. A radio base station control apparatus that controls a radio base station that transmits a signal of a primary common pilot channel to a communication terminal including a radio communication function, said radio base station control apparatus comprising:
a memory that stores a transmission power value set in advance as a value of transmission power of the primary common pilot channel;
a transmission power value comparing section that compares the transmission power value stored in said memory and a threshold set in advance;
a transmission message constructing section that sets, when the transmission power value is equal to or larger than the threshold as a result of the comparison in said transmission power value comparing section, the transmission power value as a power value to be notified, sets, when the transmission power value is smaller than the threshold, the threshold as the power value to be notified and sets a value obtained by subtracting the threshold from the transmission power value as a compensation power value, and constructs a transmission message including the power value to be notified and the compensation power value; and
a transmitting section that transmits the transmission message constructed by said transmission message constructing section to said radio base station.

12. A communication terminal including a radio communication function and configured to be connectable to a radio base station that transmits a signal of a primary common pilot channel, said communication terminal comprising:
a power-value-to-be-notified comparing section that compares a power value to be notified included in a radio control message transmitted from said radio base station and a threshold set in advance;
an extracting section that extracts a compensation power value from the radio control message when the power value to be notified and the threshold are the same as a result of the comparison in said power-value-to-be-notified comparing section;
a calculating section that adds the power value to be notified to the compensation power value extracted by said extracting section; and
a recognizing section that recognizes, when the power value to be notified and the threshold are different as a result of comparison in said power-value-to-be-notified comparing section, the power value to be notified as the transmission power value of the primary common pilot channel transmitted from said radio base station and recognizes, when the power value to be notified and the threshold are the same, a value calculated by said calculating section as the transmission power value of the primary common pilot channel transmitted from said radio base station.

13. The communication terminal according to claim 12, wherein said recognizing section recognizes, even if the power value to be notified and the threshold are the same as a result of the comparison in said power-value-to-be-notified comparing section, the power value to be notified as the transmission power value of the primary common pilot channel transmitted from said radio base station.

14. A transmission power value notifying method in a communication system including a communication terminal including a radio communication function and a radio base station that performs radio communication with said communication terminal and transmits a signal of a primary common pilot channel to said communication terminal, the transmission power value notifying method comprising:
processing in which said radio base station compares a transmission power value set in advance as a value of transmission power of the primary common pilot channel and a threshold set in advance;
processing in which said radio base station sets, when the transmission power value is equal to or larger than the threshold as a result of the comparison, the transmission power value as a power value to be notified and transmits the power value to be notified to said communication terminal;
processing in which said radio base station sets, when the transmission power value is smaller than the threshold as a result of the comparison, the threshold as the power value to be notified, sets a value obtained by subtracting the threshold from the transmission power value as a compensation power value and transmits the power value to be notified and the compensation power value to said communication terminal;
processing in which said communication terminal compares the power value to be notified transmitted from said radio base station and the threshold;
processing in which said communication terminal recognizes, when the power value to be notified and the threshold are different, the power value to be notified as the transmission power value of the primary common pilot channel transmitted from said radio base station; and
processing in which said communication terminal recognizes, when the power value to be notified and the threshold are the same, a value obtained by adding up the compensation power value and the power value to be notified transmitted from said radio base station as the transmission power value of the primary common pilot channel transmitted from said radio base station.

15. A transmission power value notifying method in a communication system including a communication terminal including a radio communication function, a radio base station that performs radio communication with said communication terminal and transmits a signal of a primary common pilot channel to said communication terminal, and a radio base station control apparatus that controls said radio base station, the transmission power value notifying method comprising:
processing in which said radio base station control apparatus compares a transmission power value set in advance as a value of transmission power of the primary common pilot channel and a first threshold set in advance;
processing in which said radio base station control apparatus transmits, when the transmission power value is equal to or larger than the first threshold as a result of the comparison, the transmission power value to said radio base station as a first power value to be notified;
processing in which said radio base station control apparatus sets, when the transmission power value is smaller than the first threshold as a result of the comparison, the first threshold as the first power value to be notified, sets a value obtained by subtracting the first threshold from the transmission power value as a first compensation power value, and transmits the first power value to be notified and the first compensation power value to said radio base station;
processing in which said radio base station compares the first power value to be notified transmitted from said radio base station control apparatus and the first threshold;
processing in which said radio base station recognizes, when the first power value to be notified and the first threshold are different as a result of the comparison, the first power value to be notified as the transmission power value of the primary common pilot channel transmitted from said radio base station;
processing in which said radio base station recognizes, when the power value to be notified and the first threshold are the same as a result of the comparison, a value obtained by adding up the first compensation power value and the first power value to be notified as the transmission power value of the primary common pilot channel transmitted from said radio base station;
processing in which said radio base station compares the recognized transmission power value and a second threshold set in advance;
processing in which said radio base station transmits, when the transmission power value is equal to or larger than the second threshold as a result of the comparison, using the transmission power, the transmission power value to said communication terminal as a second power value to be notified;
processing in which said radio base station sets, when the transmission power value is smaller than the second threshold as a result of the comparison, the second threshold as the second power value to be notified, sets a value obtained subtracting the second threshold from the transmission power value as a second compensation power value and transmits the second power value to be notified and the second compensation power value to said communication terminal with the transmission power;
processing in which said communication terminal compares the second power value to be notified transmitted from said radio base station and the second threshold;
processing in which said communication terminal recognizes, when the second power value to be notified and the second threshold are different as a result of the comparison, the second power value to be notified as the transmission power value of the primary common pilot channel transmitted from said radio base station; and
processing in which said communication terminal recognizes, when the second power value to be notified and the second threshold are the same as a result of the comparison, a value obtained by adding up the second compensation power value and the second power value to be notified as the transmission power value of the primary common pilot channel transmitted from said radio base station.

16. A transmission power value notifying method in which a radio base station, which performs radio communication with a communication terminal including a radio communication function and transmits a signal of a primary common pilot channel to said communication terminal, notifies said communication terminal of a transmission power value, the transmission power value notifying method comprising:
processing for comparing a transmission power value set in advance as a value of transmission power of the primary common pilot channel and a threshold set in advance;
processing for setting, when the transmission power value is equal to or larger than the threshold as a result of the comparison, the transmission power value as a power value to be notified and transmitting the power value to be notified to said communication terminal; and
processing for setting, when the transmission power value is smaller than the threshold as a result of the comparison, the threshold as the power value to be notified, setting a value obtained by subtracting the threshold from the transmission power value as a compensation power value, and transmitting the power value to be notified and the compensation power value to said communication terminal.

17. A transmission power value notifying method in which a radio base station, which performs radio communication with a communication terminal including a radio communication function and transmits a signal of a primary common pilot channel to said communication terminal, notifies said communication terminal of a transmission power value, the transmission power value notifying method comprising:
processing for comparing a first power value to be notified transmitted from a radio base station control apparatus that controls said radio base station and a first threshold set in advance;
processing for recognizing, when the first power value to be notified and the first threshold are different as a result of the comparison, the first power value to be notified as the transmission power value of the primary common pilot channel transmitted from said radio base station;
processing for recognizing, when the first power value to be notified and the first threshold are the same as a result of the comparison, a value obtained by adding up the first compensation power value and the first power value to be notified transmitted from said radio base station control apparatus as the transmission power value of the primary common pilot channel transmitted from said radio base station;
processing for comparing the recognized transmission power value and a second threshold set in advance;
processing for transmitting, when the transmission power value is equal to or larger than the second threshold as a result of the comparison, using the transmission power, the transmission power value to said communication terminal as a second power value to be notified; and
processing for setting, when the transmission power value is smaller than the second threshold as a result of the comparison, the second threshold as the second power value to be notified, setting a value obtained by subtracting the second threshold from the transmission power value as a second compensation power value, and transmitting the second power value to be notified and the second compensation power value to said communication terminal using the transmission power.

18. A transmission power value notifying method in which a radio base station control apparatus, which controls a radio base station that transmits a signal of a primary common pilot channel to a communication terminal including a radio communication function, notifies a transmission power value from said radio base station to said communication terminal, the transmission power value notifying method comprising:
processing for comparing a transmission power value set in advance as a value of transmission power of the primary common pilot channel and a threshold set in advance;
processing for transmitting, when the transmission power value is equal to or larger than the threshold as a result of the comparison, the transmission power value to said radio base station as a power value to be notified; and
processing for setting, when the transmission power value is smaller than the threshold as a result of the comparison, the threshold as the power value to be notified, setting a value obtained by subtracting the threshold from the transmission power value as a compensation power value, and transmitting the power value to be notified and the compensation power value to said radio base station.

19. A method in which a communication terminal including a radio communication function and configured to be connectable to a radio base station, which transmits a signal of a primary common pilot channel, recognizes a transmission power value from said radio base station, the method comprising:
processing for comparing a power value to be notified included in a radio control message transmitted from said radio base station and a threshold set in advance;
processing for recognizing, when the power value to be notified and the threshold are different as a result of the comparison, the power value to be notified as the transmission power value of the primary common pilot channel transmitted from said radio base station; and
processing for recognizing, when the power value to be notified and the threshold are the same as a result of the comparison, a value obtained by adding up a compensation power value included in the radio control message transmitted from said radio base station and the power value to be notified as the transmission power value of the primary common pilot channel transmitted from said radio base station.
